# EUROPÄISCHE PATENTSCHRIFT

(11) **EP 1 658 472 B1**
(45) Veröffentlichungstag und Bekanntmachung des Hinweises auf die Patenterteilung: **02.11.2006**
(21) Anmeldenummer: 04764469.5
(22) Anmeldetag: 25.08.2004
(51) Int. Cl.: G01C 19/72

(54) **VERFAHREN ZUR ERMITTLUNG/KOMPENSATION VON DURCH DIE LICHTQUELLE INDUZIERTEN BIAS-/RANDOM-WALK-FEHLERN IN FASEROPTISCHEN SAGNAC-INTERFEROMETERN**
METHOD FOR THE DETERMINATION/COMPENSATION OF BIAS ERRORS/RANDOM WALK ERRORS INDUCED BY THE LIGHT SOURCE IN FIBER-OPTIC SAGNAC INTERFEROMETERS
PROCEDE POUR DETECTER/COMPENSER DES ERREURS SYSTEMATIQUES/DE CHEMINEMENT ALEATOIRE INDUITES PAR LA SOURCE LUMINEUSE DANS DES INTERFEROMETRES DE SAGNAC A FIBRES OPTIQUES

(30) Priorität: 29.08.2003 DE 10339889
(43) Veröffentlichungstag der Anmeldung: 24.05.2006
(73) Patentinhaber: LITEF GmbH, 79115 Freiburg (DE)
(72) Erfinder: SPAHLINGER, Günter, 70188 Stuttgart (DE)
(74) Vertreter: Müller, Frithjof E.
(86) Internationale Anmeldenummer: PCT/EP2004/009493
(87) Internationale Veröffentlichungsnummer: WO 2005/024344

(56) Entgegenhaltungen:
- EP-A- 0 442 747
- EP-A- 0 551 537
- WO-A-99/04222
- DE-C- 10 025 395

## Beschreibung

Die Erfindung betrifft ein Verfahren zur Ermittlung/Kompensation von durch die Lichtquelle induzierten Bias-/Random-Walk-Fehlern in faseroptischen Sagnac-Interferometern.

Sagnac-Interferometer ermöglichen eine exzellente Messgenauigkeit, dementsprechend hoch sind aber auch die Anforderungen an deren Komponenten. - Die Lichtquelle nimmt hierbei eine zentrale Stellung ein, da Lichtquellenrauschen das Drehratensignal stark verfälschen kann. So können infolge von Amplitudenrauschen der Lichtquelle Fehler entstehen, die als "Random-Walk" bekannt sind. Weiterhin können durch elektrische Einstreueffekte in ein Versorgungsspannungssignal der Lichtquelle Bias-Fehler erzeugt werden.

Zur Vermeidung derartiger Fehler ist es bekannt, aus dem von der Lichtquelle emittierten Lichtstrahl vor Einspeisung desselben in die Faserspule des Interferometers einen Anteil der Lichtleistung in Form eines Referenzstrahls abzugreifen und diesen mittels einer Monitordiode in ein entsprechendes Intensitätssignal umzuwandeln. Das Intensitätssignal kann dann ausgewertet werden, um lichtquellenbedingte Fehler zu verringern. Eine Möglichkeit ist, das von der Monitordiode gelieferte Intensitätssignal zu demodulieren und ein dadurch gewonnenes Fehlersignal vom ermittelten Drehratensignal zu subtrahieren (Kompensationsverfahren). Eine andere Möglichkeit, die beispielsweise in der US-Patentschrift 6,204,921 beschrieben ist, besteht darin, das durch die Monitordiode gelieferte Intensitätssignal als Regelgröße in einem Regelkreis zur Regelung des Lichtquellenstroms/der Lichtquellen zu verwenden, womit das Amplitudenrauschen der Lichtquelle reduziert werden kann. Jedoch können in diesem Verfahren nur P-Regler zur Anwendung kommen, weil 1-Regler zwar die über unendlich lange Zeit integrierte Regelabweichung des Intensitätssignals zu Null machen, wohingegen ein gegen Null gehender Bias- oder Random-Walk-Fehler des Kreisels aber erfordert, dass das Integral des mit dem demodulierten, also des mit dem Modulationssignal multiplizierten Intensitätssignals auf Null gebracht wird. Diese Forderung ist mit einfachen analogen Reglern nicht leicht zu erfüllen. Auch lässt sich dieses Verfahren nur auf Basis eines zeitkontinuierlichen Reglers realisieren.

Die WO-A-99/04222 offenbart ein faseroptisches Sagnac-Interferometer mit einem Verfahren zur Kompensation von durch die Lichtquelle induzierten Bias-/Random-Walk-Fehlern durch Auskoppeln eines Referenzstrahls in einen zusätzlichen Photodetektor. Dazu wird mit einem kleinen Modulationsstrom eine kompensierende Modulation der Lichtquelle erzeugt.

Die der Erfindung zugrundeliegende Aufgabe ist, ein Verfahren zur Ermittlung/Kompensation der durch die Lichtquelle induzierten Bias-/Random-Walk-Fehler in faseroptischen Sagnac-Interferometern anzugeben, das gegenüber den herkömmlichen Verfahren eine erhöhte Genauigkeit aufweist.

Diese Aufgabe wird erfindungsgemäß durch ein Verfahren zur Ermittlung/Kompensation der durch die Lichtquelle induzierten Bias-/Random-Walk-Fehler gemäß Patentanspruch 1 gelöst. Des Weiteren stellt die Erfindung ein faseroptisches Sagnac-Interferometer gemäß Patentanspruch 4 bereit. Bevorzugte Ausführungsformen und Weiterbildungen des Erfindungsgedankens finden sich in jeweiligen abhängigen Ansprüchen.

Das erfindungsgemäße Verfahren ist insbesondere für faseroptische Sagnac-Interferometer konzipiert, die ein Modulationsverfahren zur stochastisch unabhängigen Verschiebung der Interferometerkennlinie bzw. des Arbeitspunkts des Interferometers in die Punkte höchster Empfindlichkeit verwenden, und lässt sich sowohl als Open-Loop-Verfahren als auch als Closed-Loop-Verfahren realisieren.

Das erfindungsgemäße Verfahren weist die folgenden Schritte auf: Zunächst wird ein Referenzstrahl aus dem Licht, das das Interferometer durchsetzt, ausgekoppelt. Die Stelle der Auskopplung wird hierbei so gewährt, dass die Intensität des Referenzstrahls proportional zur Intensität des in die Faseroptik des Interferometers eingestrahlten Lichts ist, jedoch (möglichst) keinen Intensitätsänderungen unterliegt, die durch Modulations- oder Rückstellprozesse des Interferometers bewirkt werden. Vorzugsweise wird ein Referenzstrahl aus dem von der Lichtquelle des Interferometers emittierten, sich auf die Faserspule zubewegenden Lichtstrahl ausgekoppelt, d. h. der Referenzstrahl wird aus Licht, das sich von der Lichtquelle auf die Faserspule des Interferometers zubewegt, an einer beliebigen Stelle zwischen der Lichtquelle und der Faserspule ausgekoppelt. Dann wird ein der Intensität des Referenzstrahls proportionales Referenz-Intensitätssignal erzeugt. Dieses Signal wird unter Verwendung des im Drehratenregelkreis benutzten, zur Demodulation des drehratenproportionalen Drehraten-Intensitätssignals dienenden Demodulationsmusters demoduliert. Das demodulierte Referenz-Intensitätssignal stellt ein Maß für die zu ermittelnden Bias-/Random-Walk-Fehler dar. Wesentlich hierbei ist, dass die Demodulation des Referenz-Intensitätssignals hinsichtlich der Demodulation des Drehraten-Intensitätssignals zeitlich so abgestimmt ist, dass die Signalanteile des Referenz-Intensitätssignals und des Drehraten-Intensitätssignals, die aus jeweils zum selben Zeitpunkt von der Lichtquelle emittierten Lichtanteilen resultieren, auf identische Art und Weise demoduliert werden.

Eine der Erfindung zugrundeliegende Erkenntnis ist, dass bei Verwendung eines Modulationsverfahrens zur stochastisch unabhängigen Verschiebung des Arbeitspunkts in die Punkte höchster Empfindlichkeit das Demodulationsmuster des Drehratenregelkreises bei der Ermittlung von lichtquellenspezifischen Bias-/Random-Walk-Fehlern berücksichtigt werden sollte. Die Steigungen der Intensitätskurve in den Punkten höchster Empfindlichkeit weisen nämlich unterschiedliche Vorzeichen auf, die bei Nichtbeachtung zu "falschen" Intensitätssignalen führen.

Vorzugsweise eilt die Demodulation des Referenz-Intensitätssignals der Demodulation des Drehraten-Intensitätssignals um einen Interferometer-Arbeitstakt voraus. Dabei wird unter "Arbeitstakt" im Wesentlichen die Durchlaufzeit des Lichts durch die Faserspule verstanden.

Um die ermittelten Bias-/Random-Walk-Fehler zu kompensieren, wird ein entsprechendes Ansteuersignal der Lichtquelle erzeugt, d. h. die Lichtquellenleistung wird auf Basis des demodulierten Referenz-Intensitätssignals so geregelt, dass die ermittelten Bias-/Random-Walk-Fehler kompensiert werden.

Zur Durchführung des oben beschriebenen Verfahrens stellt die Erfindung ein faseroptisches Sagnac-Interferometer bereit, das ein Modulationsverfahren zur stochastisch unabhängigen Verschiebung des Arbeitspunkts in die Punkte höchster Empfindlichkeit verwendet. Das Interferometer weist
- einen Koppler zum Auskoppeln eines Referenzstrahls aus einem von der Lichtquelle des Interferometers emittierten, sich auf die Faserspule des Interferometers zubewegenden Lichtstrahl,
- einen Photodetektor, der mit dem Referenzstrahl beaufschlagt wird und dessen Ausgangssignal der Intensität des Referenzstrahls proportional ist, und
- einen Demodulator zum Demodulieren des Referenz-Intensitätssignals unter Verwendung des im Drehratenregelkreis benutzten, zur Demodulation des drehratenproportionalen Drehraten-Intensitätssignals dienenden Demodulationsmusters auf.

Wie bereits erwähnt, kann der Referenzstrahl an einer beliebigen Stelle zwischen der Lichtquelle und der Faserspule des Interferometers ausgekoppelt werden. Hierbei sollte folgendes beachtet werden: Der Referenzstrahl lässt sich prinzipiell überall dort entnehmen, wo seine Intensität proportional zu der in die Optik des FOGs eingespeicherten Intensität ist, und von den aufgrund der Funktion des FOGs aufgeprägten Modulations- und Rückstellsignalen noch unabhängig ist. Eventuell lässt sich dieses Signal auch an einem direkt an der Lichtquelle befindlichen Monitordetektor entnehmen. Grundsätzlich muss aber beachtet werden, dass das Licht der Lichtquelle direkt nach Eintritt in die Faser aus mehr Polarisationszuständen und Moden zusammengesetzt ist, als dies schließlich am Ende der gesamten optischen Strecke, also direkt vor dem Photodetektor des Drehratenreglers, der Fall ist, da die Strecke Moden- und Polarisationsfilter enthält. Es ist nun von entscheidender Bedeutung, dass der Monitordetektor genau die Moden und Polarisationszustände "sieht", die auch der Detektor des Drehratenreglers "sieht". Bekäme der Monitordetektor nämlich weitere Moden und Polarisationszustände zugeführt, so würde er im Mittel die demodulierte Summe aller dieser Komponenten auf Null regeln. Dann würde der wirksame Zustand/Modus die unwirksamen Zustände/Modi kompensieren müssen. Damit würde sich im Drehratenregelkreis, der nur auf den wirksamen Zustand/Modus reagiert, ein erhöhter Drehratenfehler/Random-Walk zeigen. Das wäre im Sinne des Erfindungsgedankens natürlich "kontraproduktiv".

Das Ausgangssignal des Demodulators ist ein Maß für die zu ermittelnden Bias-/Random-Walk-Fehler. Der Demodulator ist auf die Demodulation des Drehraten-Intensitätssignals zeitlich so abgestimmt, dass die Signalanteile des Referenz-Intensitätssignals und des Drehraten-Intensitätssignals, die aus jeweils zum selben Zeitpunkt von der Lichtquelle emittierten Lichtanteilen resultieren, auf identische Art und Weise demoduliert werden. Um dies zu erreichen, können beispielsweise die Weglängen, die das Licht von der Lichtquelle zu dem Photodetektor zur Erzeugung des drehratenproportionalen Drehraten-Intensitätssignals und zu dem Photodetektor zur Erzeugung des Referenz-Intensitätssignals zurücklegen muss, so miteinander ins Verhältnis gesetzt werden, dass sie sich um die Weglänge unterscheiden, die das Licht während eines Interferometer-Arbeitstakts zurücklegt. Dementsprechend sind dann die Demodulationsmuster (die identisch sind) um einen Interferometer-Arbeitstakt gegeneinander verschoben.

Vorzugsweise weist das Interferometer einen Regler auf, der die Lichtquellenleistung auf Basis des Ausgangssignals des Demodulators so regelt, dass die ermittelten Bias-/Random-Walk-Fehler kompensiert werden. Der Regler bildet zusammen mit dem Demodulator und dem Photodetektor eine entsprechende Regelstrecke.

Die Erfindung soll im Folgenden unter Bezugnahme auf die begleitenden Figuren in beispielsweiser Ausführungsform näher erläutert werden. Es zeigen:
- **Fig. 1**: den schematischen Aufbau einer bevorzugten Ausführungsform des erfindungsgemäßen Interferometers.
- **Fig. 2**: eine erste bevorzugte Ausführungsform des erfindungsgemäßen Reglers.
- **Fig. 3**: eine zweite bevorzugte Ausführungsform des erfindungsgemäßen Reglers.
- **Fig. 4**: eine dritte bevorzugte Ausführungsform des erfindungsgemäßen Reglers.
- **Fig. 5**: ein faseroptisches Sagnac-Interferometer in Closed-Loop Ausführung gemäß dem Stand der Technik.

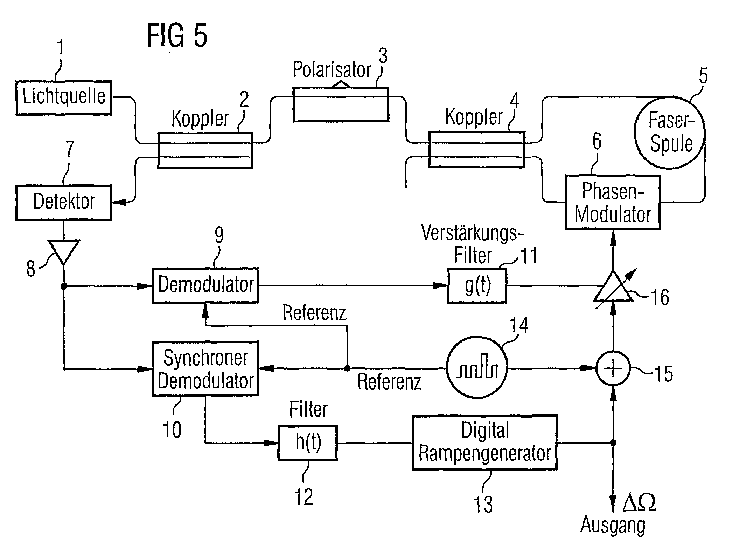

Zum besseren Verständnis der Erfindung sei im Folgenden nochmals kurz auf die Funktionsweise eines Closed-Loop-Sagnac-Interferometers eingegangen, das ein Modulationsverfahren zur stochastisch unabhängigen Verschiebung der Interferometerkennlinie bzw. des Arbeitspunkts des Interferometers in die Punkte höchster Empfindlichkeit verwendet (Fig. 5).

Das Licht einer hinsichtlich Intensität und Wellenlänge stabilisierten Lichtquelle 1 gelangt über eine Faserstrecke auf einen ersten Strahlteiler 2, von dort über einen Polarisator 3 auf einen zweiten Strahlteiler 4. Von den beiden der Lichtquelle 1 abgewandten Aus-/Eingängen gelangen die durch Strahlteilung entstandenen Teilstrahlen auf die beiden Ein-/Ausgänge einer Faserspule 5, wobei zwischen den Aus-/Eingängen des zweiten Strahlteilers 4 bzw. den Ein-/Ausgängen der Faserspule 5 ein Phasenmodulator 6 angeordnet ist. Die im zweiten Strahlteiler 4 nach Durchlaufen der Faserspule 5 interferierenden Teilstrahlen durchlaufen wiederum den Polarisator 3 und werden über den ersten Strahlteiler 2 zu einem möglichst großen Anteil auf einen Photodetektor 7 geleitet. Das Ausgangssignal des Photodetektors 7 wird zunächst durch einen Verstärker 8 angehoben und beaufschlagt einen Demodulator 9 einerseits und einen Synchrondemodulator 10 andererseits. Der Demodulator 9 bildet zusammen mit einem Verstärkungsfilter 11 eine Skalenfaktorregelstrecke. Der Synchrondemodulator 10 steuert über ein Filter 12 einen Rampengenerator 13 an, der zur Erzeugung eines Rückstellsignals dient. Das durch einen Modulationsoszillator 14 erzeugte Signal zum Verschieben des Arbeitspunkts in den Punkt höchster Empfindlichkeit und das Rückstellsignal werden durch einen Addierer 15 zu einem einzigen Signal zusammengesetzt und bilden das Eingangssignal eines regelbaren Verstärkers 16, welcher dieses Signal mit einem als Verstärkungsfaktor dienenden Ausgangssignal des Verstärkungsfilters 11 verstärkt. Das dadurch erhaltene Ausgangssignal des regelbaren Verstärkers 16 dient wiederum zur Ansteuerung des Phasenmodulators 6.

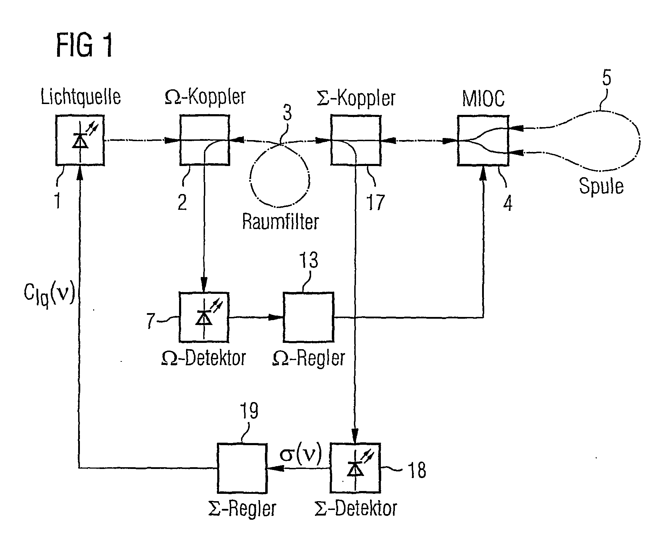

Nun soll unter Bezugnahme auf Fig. 1 das erfindungsgemäße Interferometer näher erläutert werden. Dabei sind Bauteile bzw. Einrichtungen, die denen aus Fig. 5 entsprechen mit denselben Bezugsziffern gekennzeichnet.

Das von einer Lichtquelle 1 erzeugte Licht gelangt über einen ersten Koppler 2, ein Raumfilter 3 und einen zweiten Koppler 17 zu einem Hauptstrahlteiler 4. Die in dem Hauptstrahlteiler 4 entstandenen Teilstrahlen durchlaufen eine Faserspule 5 und werden zu einem Interferenzstrahl wieder vereinigt. Der Interferenzstrahl gelangt über den zweiten Koppler 17 und das Raumfilter 3 zu dem ersten Koppler 2, der aus dem Interferenzstrahl einen bestimmten Anteil auskoppelt und diesen auf einen Drehratendetektor 7 lenkt. Ein Ausgangssignal des Drehratendetektors 7, das ein der Drehrate proportionales Intensitätssignal ist, beaufschlagt einen Drehratenregler 13, der einen Phasenmodulator (nicht gezeigt) so steuert, dass die gemessene Drehrate verschwindet. Die Komponenten zur stochastisch unabhängigen Verschiebung der Interferometerkennlinie bzw. des Arbeitspunkts des Interferometers in die Punkte höchster Empfindlichkeit sind in Fig. 1 der Einfachheit halber nicht gezeigt.

Das in Fig. 1 gezeigte Interferometer unterscheidet sich von dem in Fig. 15 gezeigten Interferometer im Wesentlichen dadurch, dass zusätzlich ein Regelkreis zur Regelung der Lichtquellenleistung vorgesehen ist. Dieser Regelkreis weist den zweiten Koppler 17, einen Lichtleistungsdetektor 18 und einen Lichtleistungsregler 19 auf. Der zweite Koppler 17 koppelt aus dem von der Lichtquelle kommenden, zur Faserspule 5 hinlaufenden Lichtstrahl einen Referenzstrahl aus und führt diesen dem Lichtleistungsdetektor 18 zu. Ein Ausgangssignal des Lichtleistungsdetektors 18 σ(ν), das der Intensität des Referenzstrahls proportional ist, beaufschlagt den Lichtleistungsregler 19, der in Abhängigkeit davon die Lichtquellenleistung so regelt, dass die Bias-/Random-Walk-Fehler kompensiert werden. Unter "Faseroptik des Interferometers" werden in dem in Figur 1 gezeigten Ausführungsbeispiel insbesondere die mit Bezugskennzeichen 1, 2, 3, 4, 5 und 17 bezeichneten Komponenten sowie dazwischenliegende Faserstrecken verstanden.

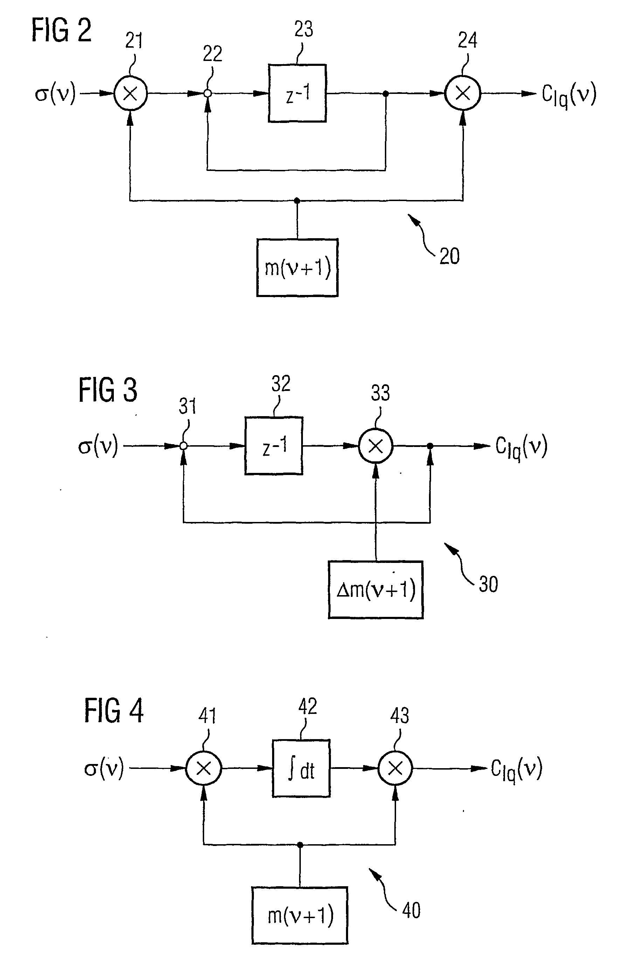

Im Folgenden soll unter Bezugnahme auf Fig. 2 eine bevorzugte Ausführungsform 20 des Lichtleistungsreglers 19 beschrieben werden. Dabei wird ein zeitdiskretes Verfahren beschrieben, das digital durchgeführt werden kann. Jedoch ist es genauso möglich, eine zeitkontinuierliche (analoge) Variante zu realisieren.

Das vom Lichtleistungsdetektor 18 gelieferte und (vorzugsweise synchron zum Drehratendetektor) abgetastete Signal σ(ν) wird in einem Demodulator 21 demoduliert, d. h. mit dem Demodulationssignal m(ν + 1) multipliziert. Das Demodulationssignal m(ν) e {-1,1} ist das gleiche Demodulationssignal, das auch im Derhratenregelkreis benutzt wird, also das Random-Demodulationssignal des Hauptregelkreises, d. h. das Demodulationssignal, das in Fig. 5 von den Demodulatoren mit den Bezugszeichen 9 und 10 benutzt und von dem Modulationsoszillator 14 erzeugt wird. Prinzipiell ist das Demodulationssingnal das gleiche wie das des Hauptregelkreises. Die konkrete Wahl des Demodulationssignals ist offen. Beispielsweise kann auch eine deterministische Modulation/Demodulation verwendet werden. Hierbei stellt der Parameter ν einen diskreten zeitabhängigen Wert dar. Da Lichtanteile, die von der Lichtquelle 1 zum gleichen Zeitpunkt ausgestrahlt werden, zu unterschiedlichen Zeitpunkten auf den Drehratendetektor 7 und auf den Lichtleistungsdetektor 18 treffen, muss das Demodulationssignal bzw. das Demodulationsmuster m(ν) den beiden Detektoren zu unterschiedlichen Zeitpunkten zur Verfügung gestellt werden. In dieser Ausführungsform sind die jeweiligen Faserstrecken zu den Detektoren 7 und 18 so ausgestaltet, dass die Laufzeitdifferenz einen Arbeitstakt des Interferometers beträgt. Dem Lichtleistungsdetektor 18 muss das Demodulationssignal m(ν) also mit einer negativen Verzögerung (ein Arbeitstakt "verfrüht") bereitgestellt werden, da dieser Detektor das Licht einen Arbeitstakt früher empfängt als der Drehratendetektor 7. Das demodulierte Signal, d. h. das mit m(ν + 1) multiplizierte Signal, gelangt über eine Addierstufe 22 zu einem Akkumulator 23, der das Eingangssignal integriert und ein entsprechend integriertes Ausgangssignal einem Modulator 24 zuführt. Der Modulator 24 multipliziert das integrierte Signal mit dem Demodulationssignal m(ν + 1) und erzeugt ein entsprechendes Ausgangssignal clq(ν) zur Ansteuerung der Lichtquelle 1, womit das integrierte Signal mit m(ν + 1) moduliert dem Lichtquellenstrom (mit negativen Vorzeichen) aufgeprägt wird. Auf diese Art und Weise wird sichergestellt, dass die unterschiedlichen Steigungen der Intensitätskurve in den Punkten höchster Empfindlichkeit berücksichtigt werden, d. h., dass Langzeitkorrelationen von σ(ν) mit m(ν + 1) verschwinden. Somit sind Langzeitkorrelationen des Lichtquellenrauschens mit dem Demodulationssignal des Drehratenreglers 7 eliminiert.

Wenn die Faserstrecken von der Lichtquelle zu dem Drehratendetektor 7 und dem Lichtleistungsdetektor 18 gleich lang gewählt werden (beispielsweise durch das Vorsehen einer zusätzlichen Faserspule in der Faserstrecke zwischen dem zweiten Koppler 17 und dem Lichtleistungsdetektor 18, so kann das Verschieben der Demodulationsmuster um einen Arbeitstakt entfallen. Es muss lediglich sichergestellt werden, dass Signalanteile im Ausgangssignal des Drehratendetektors 7 und im Ausgangssignal des Lichtleistungsdetektors 18, die aus jeweils zum selben Zeitpunkt von der Lichtquelle 1 emittierten Lichtanteilen resultieren, auf identische Art und Weise demoduliert werden.

Unter Bezugnahme auf Fig. 3 soll im Folgenden eine weitere mögliche Ausführungsform des Lichtleistungsreglers 19 aus Fig. 1 gegeben werden.

Ein Lichtleistungsregler 30 führt das Ausgangssignal des Lichtleistungsdetektors 18 über eine Addierstufe 31 einem Akkumulator 32 zu. Ein integriertes Ausgangssignal des Akkumulators 32 wird einem Demodulator 33 zugeführt, der das Signal mit einem Signal Δm(ν + 1) = m(ν + 1) · m(ν) demoduliert. Die in Fig. 2 und 3 gezeigten Regler sind austauschbar, d. h. sie erzeugen bei gleichem Eingangssignal das gleiche Ausgangssignal.

Das vorangehend beschriebene Verfahren ist ein zeitdiskretes Verfahren, das in die Digitalelektronik des Interferometeres mit aufgenommen werden kann. Es berücksichtigt das gegebene Demodulationsmusters und eliminiert Langzeitkorrelationen des Lichtquellenrauschens mit dem Demodulationssignal des Haupt-(Drehraten-)Reglers. Das Verfahren basiert auf einem zusätzlichen Regler (dem Lichtleistungsregler), der sein Eingangssignal von einer Monitorphotodiode bezieht und dessen Ausgangssignal die Lichtquellenleistung so moduliert, dass "Drehraten-Anteile" aus dem Lichtsignal verschwinden.

Das vorangehend beschriebene Verfahren lässt sich auch in analoger Weise realisieren. Dazu wird, wie in Fig. 4 gezeigt, ein analoger Regler 40 eingesetzt, der das Ausgangssignal des Lichtleistungsdetektors 18 einem analogen Multiplizierer 41 zuführt, wo es mit dem Demodulationssignal m(ν + 1) des Hauptregelkreises multipliziert wird. Das demodulierte Signal wird einem analogen Integrator 42 zugeführt, und ein Ausgangssignal des analogen Integrators 42 einem analogen Multiplizierer 43 zugeführt, der dieses Signal mit dem Demodulationssignal m(ν + 1) multipliziert, wobei das entsprechende Ausganssignal clq(ν) den Lichtquellenstrom steuert.

Das erfindungsgemäße Verfahren/Interferometer weist gegenüber dem Stand der Technik die folgenden Besonderheiten auf:
- Es eignet sich für Faserkreisel mit Random-Modulation, da es das Random-Modulations-/Demodulationsmuster mit einbezieht (zur näheren Erläuterung des Random-Modulationsverfahrens sei beispielhaft auf die europäische Patentschrift EP 0 551 537 B1 verwiesen).
- Das erfindungsgemäße Verfahren implementiert eine integrierende, wahlweise analoge bzw. diskrete Regelschleife unter Einbeziehung einer Monitordiode und eines Lichtquellen-Intensitäts-Modulators, die Stör- und Rauschsignale im Lichtquellensignal, die zu Langzeitfehlern (Random-Walk und Bias) des Kreiselsignals führen würden, zu Null macht.
- Das Verfahren erlaubt, den Drehratendetektor und den Lichtleistungsdetektor identisch auszugestalten (einschließlich Abtastzeitpunkte, Optimalfilter und Austaster), was eine maximale Kompensation ermöglicht.

## Patentansprüche

1. Verfahren zur Ermittlung/Kompensation von durch die Lichtquelle (1) induzierten Bias-/Random-Walk-Fehlern in faseroptischen Sagnac-Interferometern, die ein Modulationsverfahren zur stochastisch unabhängigen Verschiebung des Arbeitspunkts in die Punkte höchster Empfindlichkeit verwenden, mit den folgenden Schritten:
- Auskoppeln eines Referenzstrahls aus dem das Interferometer durchsetzenden Licht unter Verwendung eines Kopplers (17) derart, dass die Intensität des Referenzstrahls proportional zur Intensität des in die Faseroptik des Interferometers eingestrahlten Lichts ist, jedoch keinen aufgrund von Modulations- und/oder Rückstellprozessen bewirkten Änderungen unterliegt;
- Erzeugen eines der Intensität des Referenzstrahls proportionalen Referenz-Intensitätssignals, indem das Ausgangssignal eines Photodetektors (18), der mit dem Referenzstrahl beaufschlagt wird, abgegriffen wird;
- Demodulieren des Referenz-Intensitätssignals unter Verwendung des im Drehratenregelkreis (7, 13) benutzten, zur Demodulation des drehratenproportionalen Drehraten-Intensitätssignals dienenden Demodulationsmusters unter Verwendung eines Demodulators (21, 33), womit ein demoduliertes Referenz-Intensitätssignal erhalten wird, das ein Maß für die zu ermittelnden Bias-/Random-Walk-Fehler darstellt,
- wobei die Demodulation des Referenz-Intensitätssignals hinsichtlich der Demodulation des Drehraten-Intensitätssignals zeitlich so abgestimmt ist, dass die Signalanteile des Referenz-Intensitätssignals und des Drehraten-Intensitätssignals, die aus jeweils zum selben Zeitpunkt von der Lichtquelle emittierten Lichtanteilen resultieren, auf identische Art und Weise demoduliert werden.

2. Verfahren nach Anspruch 1, **dadurch gekennzeichnet, dass** die Demodulation des Referenz-Intensitätssignals der Demodulation des Drehraten-Intensitätssignals um einen Interferometer-Arbeitstakt vorauseilt.

3. Verfahren nach Anspruch 1 oder 2, **dadurch gekennzeichnet, dass** die Lichtquellenleistung auf Basis des demodulierten Referenz-Intensitätssignals so geregelt wird, dass die ermittelten Bias-/Random-Walk-Fehler kompensiert werden.

4. Faseroptisches Sagnac-Interferometer, das ein Modulationsverfahren zur stochastisch unabhängigen Verschiebung des Arbeitspunkts in die Punkte höchster Empfindlichkeit verwendet, mit:
- einem Koppler (17) zum Auskoppeln eines Referenzstrahls aus von der Lichtquelle (1) des Interferometers emittiertern Lich derart, dass die Intensität des Referenzstrahls proportional zur Intensität des in die Faseroptik des Interferometers eingestrahlten Lichts ist, jedoch keinen aufgrund von Modulations- und/oder Rückstellprozessen bewirkten Änderungen unterliegt;
- einem Photodetektor (18), der so angeordnet ist, dass er mit dem Referenzstrahl beaufschlagt wird, und dass sein Ausgangssignal der Intensität des Referenzstrahls proportional ist,
- einem Demodulator (21, 33) zum Demodulieren des Referenz-Intensitätssignals unter Verwendung des im Drehratenregelkreis benutzten, zur Demodulation des drehratenproportionalen Drehraten-Intensitätssignals dienenden Demodulationsmusters, der so angeordnet ist, dass ein Ausgangssignal des Demodulators (21, 33) ein Maß für die zu ermittelnden Bias-/Random-Walk-Fehler darstellt,
- wobei der Demodulator (21, 33) auf die Demodulation des Drehraten-Intensitätssignals zeitlich so abgestimmt ist, dass die Signalanteile des Referenz-Intensitätssignals und des Drehraten-Intensitätssignals, die aus jeweils zum selben Zeitpunkt von der Lichtquelle (1) emittierten Lichtanteilen resultieren, auf identische Art und Weise demoduliert werden.

5. Interferometer nach Anspruch 4, **dadurch gekennzeichnet, dass** dieses so angeordnet ist, dass die Weglängen, die das Licht von der Lichtquelle (1) zu dem Photodetektor (7) zur Erzeugung des drehratenproportionalen Drehraten-Intensitätssignals und zu dem Photodetektor (18) zur Erzeugung des Referenz-Intensitätssignals zurücklegen muss, so miteinander im Verhältnis stehen, dass sie sich um die Weglänge unterscheiden, die das Licht in einem Interferometer-Arbeitstakt zurücklegt, und die Demodulationsmuster entsprechend um einen Interferometer-Arbeitstakt gegeneinander verschoben sind.

6. Interferometer nach Anspruch 4 oder 5, **gekennzeichnet durch** einen Regler, der so angeordnet ist, dass er die Lichtquellenleistung auf Basis des Ausgangssignals des Demodulators so regelt, dass die ermittelten Bias-/Random-Walk-Fehler kompensiert werden.

## Claims

1. A method for determination of/compensation for bias/random walk errors induced by the light source (1) in fiber-optic Sagnac interferometers which use a modulation method for stochastically independent shifting of the operating point to the points of highest sensitivity, comprising the following steps:
- outputting of a reference beam from the light passing through the interferometer using a coupler (17), in such a way that the intensity of the reference beam is proportional to the intensity of the light injected into the fiber optics of the interferometer, but is not subject to any changes caused by modulation and/or resetting processes:
- production of a reference intensity signal which is proportional to the intensity of the reference beam by tapping the output signal from a photodetector (18) which the reference beam is applied;
- demodulation of the reference intensity signal using the demodulation pattern which is used in the rotation rate control loop (7, 13) and is used for demodulation of the rotation rate intensity signal, which is proportional to the rotational rate, using a demodulator (21, 33), by which means a demodulated reference intensity signal is obtained which represents a measure of the bias/random walk errors to be determined,
- with the demodulation of the reference intensity signal being matched in time to the demodulation of the rotation rate intensity signal such that the signal components of the reference intensity signal and of the rotation rate intensity signal which each result from light components emitted from the light source at the same time are demodulated in an identical manner.

2. The method as claimed in claim 1, **characterized in that** the demodulation of the reference intensity signal precedes the demodulation of the rotation rate intensity signal by one interferometer working clock cycle.

3. The method as claimed in claim 1 or 2, **characterized in that** the light source power is controlled on the basis of the demodulated reference intensity signal such that the determined bias/random walk errors are compensated for.

4. A fiber-optic Sagnac interferometer which uses a modulation method for stochastically independent shifting of the operating point to the points of highest sensitivity, having:
- a coupler (17) for outputting a reference beam from light which is emitted from the light source (1) of the interferometer, in such a way that the intensity of the reference beam is proportional to the intensity of the light injected into the fiber optics of the interferometer, but is not subject to any changes caused by modulation and/or resetting processes;
- a photodetector (18), which is arranged such that the reference beam is applied thereto, and that its output signal is proportional to the intensity of the reference beam,
- a demodulator (21, 33) for demodulation of the reference intensity signal using the demodulation pattern which is used in the rotation rate control loop and is used for demodulation of the rotation rate intensity signal, which is proportional to the rotation rate, said demodulator (21, 33) being arranged such that an output signal from the demodulator (21, 33) represents a measure of the bias/random walk errors to be determined,
- with the demodulator (21, 33) being matched in time to the demodulation of the rotation rate intensity signal such that the signal components of the reference intensity signal and of the rotation rate intensity signal which each result from light components emitted from the light source (1) at the same time are demodulated in an identical manner.

5. The interferometer as claimed in claim 4, **characterized in that** it is arranged such that the path lengths which the light must travel from the light source (1) to the photodetector (7) in order to produce the rotation rate intensity signal which is proportional to the rotation rate, and to the photodetector (18) in order to produce the reference intensity signal are related to one another in such a way that they differ by the path length which the light travels in one interferometer working clock cycle, and the demodulation patterns are shifted in a corresponding manner with respect to one another by one interferometer working clock cycle.

6. The interferometer as claimed in claim 4 or 5, **characterized by** a regulator which is arranged such that it controls the light source power on the basis of the output signal from the demodulator such that the determined bias/random walk errors are compensated for.

## Revendications

1. Procédé pour détecter/compenser des erreurs systématiques/de cheminement aléatoire dans des interféromètres de Sagnac à fibres optiques, qui utilisent un procédé de modulation en vue du décalage indépendant stochastique du point de fonctionnement dynamique dans les points de sensibilité très élevée, comportant les étapes suivantes :
- le découplage d'un rayon de référence de la lumière traversant l'interféromètre en utilisant un coupleur (17) de sorte que l'intensité du rayon de référence est proportionnelle à l'intensité de la lumière rayonnée dans l'optique à fibres de verre de l'interféromètre, ne subit aucune modification provoquée en raison de processus de modulation et/ou de réinitialisation ;
- la génération d'un signal d'intensité de référence proportionnel à l'intensité du rayon de référence, où le signal de sortie d'un photodétecteur (18), qui est alimenté par le rayon de référence, est prélevé ;
- la démodulation du signal d'intensité de référence en utilisant un type de démodulation servant à la démodulation du signal d'intensité de vitesse de rotation proportionnel à la vitesse de rotation utilisé dans le circuit de réglage de vitesse de rotation (7, 13) en utilisant un démodulateur (21, 33), grâce auquel un signal d'intensité de référence démodulé est obtenu, qui représente une mesure pour l'erreur systématique/de cheminement aléatoire à détecter,
- dans laquelle la démodulation du signal d'intensité de référence est ajustée temporellement par rapport à la démodulation du signal d'intensité de vitesse de rotation de sorte que la proportion de signal du signal d'intensité de référence et du signal d'intensité de vitesse de rotation, qui résulte de la proportion de lumière émise par la source lumineuse respectivement simultanément, est démodulée de manière identique.

2. Procédé selon la revendication 1, **caractérisé en ce que** la démodulation du signal d'intensité de référence de la démodulation du signal d'intensité de vitesse de rotation est en avance de phase d'un cycle de travail d'interféromètre.

3. Procédé selon la revendication 1 ou 2, **caractérisé en ce que** la puissance de la source lumineuse est réglée en fonction du signal d'intensité de référence démodulé de sorte que les erreurs systématiques/de cheminement aléatoire détectées sont compensées.

4. Interféromètre de Sagnac à fibres optiques, qui utilise un procédé de modulation en vue du décalage indépendant stochastique du point de fonctionnement dans les points à sensibilité très élevée, comportant :
- un coupleur (17) pour le découplage d'un rayon de référence provenant de la lumière émise par la source lumineuse (1) de l'interféromètre de sorte que l'intensité du rayon de référence est proportionnelle à l'intensité de la lumière rayonnée dans l'optique à fibres optiques de l'interféromètre, ne subit cependant aucune modification provoquée en raison de processus de modulation et/ou de réinitialisation ;
- un photodétecteur (18) disposé de sorte qu'il est alimenté par le rayon de référence, et en ce que son signal de sortie est proportionnel à l'intensité du rayon de référence,
- un démodulateur (21, 33) pour démoduler le signal d'intensité de référence en utilisant le type de démodulation servant à la démodulation du signal d'intensité de vitesse de rotation proportionnel à la vitesse de rotation utilisé dans le circuit de réglage de vitesse de rotation, disposé de sorte qu'un signal de sortie du démodulateur (21, 33) représente une mesure pour les erreurs systématiques/de cheminement aléatoire à détecter,
- dans lequel le démodulateur (21, 33) est accordé temporellement sur la démodulation du signal d'intensité de vitesse de rotation de sorte que la proportion de signal du signal d'intensité de référence et du signal d'intensité de vitesse de rotation, qui résulte de la proportion de lumière émises par la source lumineuse (1) respectivement simultanément, est démodulée de manière identique.

5. Interféromètre selon la revendication 4, **caractérisé en ce que** celui-ci est disposé de sorte que les trajets optiques, que la lumière doit parcourir de la source lumineuse (1) au photodétecteur (7) pour générer le signal d'intensité de vitesse de rotation proportionnel à la vitesse de rotation et au photodétecteur (18) pour générer le signal d'intensité de référence, sont en rapport les uns aux autres, de sorte qu'ils se différencient des trajets optiques, que la lumière parcourt dans un cycle de travail d'interféromètre, et les types de démodulation sont décalés les uns par rapport aux autres de façon appropriée d'un cycle de travail d'interféromètre.

6. Interféromètre selon la revendication 4 ou 5, **caractérisé par** un régulateur disposé de sorte que la puissance de source lumineuse est réglée en fonction du signal de sortie du démodulateur de sorte que les erreurs systématiques/de cheminement aléatoire détectées sont compensées.
